# EUROPEAN PATENT APPLICATION

(11) **EP 3 892 965 A1**
(43) Date of publication of application: **13.10.2021**
(21) Application number: 20168242.4
(22) Date of filing: 06.04.2020
(51) Int. Cl.: G01F 1/684, G01F 1/696

(54) **METHOD AND DEVICE FOR DETECTING OR MEASURING A FLOW OF A FLUID**

(71) Applicant: Krick Messtechnik & Partner GmbH & Co. KG, 63505 Langenselbold (DE)
(72) Inventor: KRICK, Herbert, 63505 Langenselbold (DE); HOFMANN, Jürgen, 63505 Langenselbold (DE)
(74) Representative: Schultheiss & Sterzel Patentanwälte PartG mbB

(57) **Abstract**

The invention relates to a method for detecting a flow of a fluid in a pipe (10) comprising the steps
Heating a resistance thermometer which is placed inside a pipe (10),
Measuring the electric resistance or the voltage of the resistance thermometer over time,
Detecting a raise or a drop of the electric resistance or the voltage by evaluating the measured function of time,
Evaluating if the raise or if the drop exceeds preset values and/or evaluating if the time derivative of the function raises above a positive gradient or drops below a negative gradient, and
Storing data in an electronic memory or producing a signal indicating a stop of a flow of the fluid in the pipe (10) if raising above a first preset value and/or if the time derivative of the function raises above the positive gradient, or the data or the signal indicating detection of a flow of the fluid in the pipe (10) if dropping below a second preset value and/or if the time derivative of the function drops below the negative gradient.

The invention also relates to a device for performing such a method.

## Description

The invention relates to a method and a device for detecting or measuring a flow of a fluid, preferably a liquid, in a pipe.

In particular, the present invention is related to a small-sized thermal type flow detecting sensor (which is sometimes referred to as a temperature probe in the following) and a method for using a resistance thermometer to determine whether a fluid or liquid medium in a pipe is moving/flowing or not.

Flow of liquids in pipes can be detected by measuring changes in temperature or heat loss caused by the flowing fluid.

DE 10 2010 018 948 A1 discloses a thermal flow meter having a first temperature sensor for determining temperature of a fluid, and a second temperature sensor arranged at a distance from the first temperature sensor for detecting deposit on a sensor chip. An electronic evaluation unit monitors temperature difference between the two temperature sensors to computationally eliminate parasitic induction of measurement caused by the deposit, where the temperature difference characterizes heat flow within the sensor chip. The former sensor is arranged on the sensor chip that stays in contact with the medium. A method for operating a thermal mass flow meter is also disclosed.

This method and this flow meter are used for chemical reactors and thus having the disadvantage in being too complex for easier applications such as controlling occurrence of a flow of drinking water in drinking water pipes. Therefore, it is an object of the present invention to find a simple way to determine if a flow of a fluid occurs or not.

JP 2019-027823 A discloses a flow meter which comprises a linear electrical resistance part, which is wound around an outer surface of a wall of a pipe. The flow meter further comprises a power supply part for performing energization of the electrical resistance part to heat the electrical resistance part. A resistance value is detected and a temperature of the electrical resistance part is calculated based on the resistance value of the electrical resistance part. The flow velocity of the fluid flowing through the pipe includes a temperature theoretical calculation in which a theoretical value of the temperature of the electrical resistance part is estimated.

The setup can be used to estimate the volume flow of a liquid inside the pipe, if the volume flow is constant or if an average flow has to be estimated. This setup thus has the drawback, that it is not very sensitive to a change of the flow. Small changes or fast changes make it difficult to be detected by this method and this flow meter. The inertia of the setup prevents the system from being applicable for determining if quick changes in a flow inside a pipe occur. Furthermore, this method and flow meter suffers from external influences on the electrical resistance part which may distort the measurement.

DE 20 2005 008 774 U1 discloses a sensor for measuring a flow of a medium. The sensor comprises a heater and an electrical resistance thermometer, which is located in the center of a substrate. The function of this sensor is that of an hot-wire anemometer. The electrical resistance thermometer is used as a heater and sensor by alternating heating and measuring. A measuring voltage is chosen so low that the heating should not affect the measurement. The method has the drawback, that only slow changes of the flow velocity can be measured. In addition, the setup is suitable for measuring wind velocities without casing but not for detecting or measuring flows of liquids in pipes.

The object of the present invention is to overcome these and other disadvantages of presently known methods for measuring flows of fluids in pipes and of presently known devices for measuring flows of fluids in pipes.

The object of the present invention is to allow a quick determination if a fluid, or preferably a liquid, in a pipe flows or not. The setup should be inexpensive and easy to install. If possible, the method and the device should allow an estimation of the volume flow of the fluid in the pipe, if a flow is detected. Furthermore, it would be helpful for hygienic reasons to enforce a flow or a flush through the pipe if no flow occurred for a long enough time or at least give a signal in form of a warning that a flush is necessary. The setup necessary for the method should also be as insensitive for disturbances and from external influences as possible.

The problems of the invention are solved by a method according to claim 1 and by a device according to claim 12.

In more detail problems of the invention are solved by a method for detecting or measuring a flow of a fluid, preferably a liquid, in a pipe comprising the steps of
A) Heating a resistance thermometer which is placed inside a pipe for conducting a fluid, preferably a liquid, and the resistance thermometer being in thermal contact with the fluid, preferably the liquid, inside the pipe,
B) Measuring the electric resistance of the resistance thermometer continuously or repeatedly over time or measuring the voltage applied to the resistance thermometer continuously or repeatedly over time,
C) Detecting a raise or a drop of the electric resistance of the resistance thermometer or the voltage applied to the resistance thermometer by evaluating the measured electric resistance or the voltage as a function of time,
D1) Evaluating if the raise of the electric resistance or the voltage raises above a first preset value or if the drop of the electric resistance or the voltage drops below a second preset value and/or
D2) Evaluating if the time derivative of the function of the electric resistance over time or of the function of the voltage over time raises above a positive gradient or if the time derivative of the function of the electric resistance over time or of the function of the voltage over time drops below a negative gradient, and
E) Storing data in an electronic memory and/or producing a signal,
   E1) the data and/or the signal indicating a stop of a flow of the fluid in the pipe if the electric resistance or the voltage raises above the first preset value and/or if the time derivative of the function of the electric resistance over time or of the function of the voltage over time raises above the positive gradient, and/or
   E2) the data and/or the signal indicating detection of a flow of the fluid in the pipe if the electric resistance or the voltage drops below the second preset value and/or if the time derivative of the function of the electric resistance over time or of the function of the voltage over time drops below the negative gradient.

The electric resistance can be measured by measuring the voltage applied to the resistance thermometer at a constant electric heating current. The electric heating current does not need to be exactly constant. It can be sufficient if the electric heating current does not vary more than 20%, preferably not more than 10% of the absolute value of the electric heating current over time. It is preferred that the variation of the heating current over time changes slowly such that the change of the electric heating current does not change within 2 s for more than 10%, preferably for more than 5% of the absolute value of the electric heating current over time.

The first preset value and the second preset value can be defined by a percentage of the previous value of the electric resistance before a raise or a drop of the electric resistance has been detected. For example, if the electric resistance drops at least 10% or raises at least 10%, the data can be stored and/or the signal can be produced. Therefore, the first preset value can be 10% higher than the electric resistance before the raise and the second preset value can be 10% lower than the electric resistance before the drop.

The first preset value and the second preset value can depend from the constant heating current heating the resistance thermometer and from the type of fluid conducted in the pipe.

The derivative of the functions over time preferably is a first derivative of the functions over time.

It can be provided that the resistance thermometer is heated by conducting an electric heating current through the resistance thermometer, preferably by conducting a constant electric heating current through the resistance thermometer.

Hereby it can be ensured, that the resistance thermometer is heated constantly and that in each period of time a constant heat is produced by the electric heating current in the resistance thermometer. This allows to measure the electric resistance of the resistance thermometer by measuring the voltage applied to the resistance thermometer.

Preferably the constant electric heating current is between 1 mA and 1 A, particular preferably between 10 mA and 100 mA.

It can also be provided that the fluid is a liquid, preferably water, wherein particular preferably the method is used to detect a flow of water through the pipe.

The method is in particular beneficial for liquids, because the amount of heat transported into a liquid is much higher than that which is possible by a gas. Therefore, the derived signal will be much higher and/or the heating of the resistance thermometer can be chosen much lower.

Here, a method can be provided including the step of measuring a duration of a first time span during which the electric resistance and/or the voltage is below the second preset value or during which the derivative of time of the electric resistance and/or the voltage over time is below the positive gradient, wherein a value of a volumetric flow of the liquid in the pipe is calculated by from a known pipe diameter of the pipe, a known pressure by which the liquid flow is driven through the pipe and by the duration of the first time span.

Here it can further be provided that the value of the volumetric flow is saved together with a date to the electronic memory, is transferred to a computer via a port or an output interface and/or is displayed on a display, wherein particular preferably a value of the temperature of the liquid is also measured using the resistance thermometer and the value of the temperature is being saved to the electronic memory, send to the computer via the port or the output interface and/or is displayed on the display.

Hereby not only the occurrence of a flow of the liquid can be determined but also the amount of liquid flowing through the pipe can be determined. This information can be used to decide if a sufficient volume flow has taken place.

It can further be provided that the method comprises the step of generating a warning signal or flushing the fluid through the pipe if no drop below the second preset value is detected or if no drop below the negative gradient is detected for a predetermined time, preferably for a time of at least 24 hours, particular preferably for a time of 72 hours, wherein in particular the predetermined time can be manually reset by the user or is automatically reset if a flushing of the fluid is recognized by the evaluation for a minimum time duration.

Hereby a volume flow of the fluid through the pipe can be ensured or at least stimulated.

Furthermore, it can be provided that the resistance thermometer is heated with an electric power of no more than 30 Watt, preferably of between 0.1 to 10 Watt, particular preferably of between 0.5 Watt and 5 Watt.

These relatively low electric powers are sufficient to make a drop of electric resistance of the resistance thermometer visible, if a flow of the fluid cools the resistance thermometer.

It can also be provided that the electric resistance of the resistance thermometer and/or the voltage applied to the resistance thermometer is measured continuously or repeatedly at least once every 10 minutes, preferably is measured repeatedly between every 0.1 second and every minute, particular preferably is measured repeatedly between every second and every 10 seconds.

It may also be provided that the first preset value of the electric resistance and/or the voltage and the second preset value of the electric resistance and/or the voltage is equivalent to a drop or raise of the temperature of the resistance thermometer of at least 0.5 K, preferably of between 1 K and 10 K.

These time periods and these temperature changes are suitable to detect the flow of the fluid in the pipe for most common applications. Especially they are suitable for detecting the flow of liquid in a pipe, like drinking water in a water pipe.

It can be provided that the resistance thermometer is placed in the geometric center of the pipe.

The geometric center of the pipe is the center of the inner cross-section of pipe. In other words, halfway the cross-section of the pipe.

Hereby it can be ensured that the resistance thermometer is located at a place with the strongest flow of the fluid and the highest cooling effect of the liquid, thus improving the sensitivity of the method and the measurements of the method.

It can be provided that the method comprises the step of placing the resistance thermometer in the pipe by fixing a temperature probe comprising the resistance thermometer at an access port of the pipe, wherein preferably the temperature probe has at least two detents and the temperature probe is inserted through the access port into the pipe until a counter detent of the access port or of a connector snaps into one of the at least two detents of the temperature probe, wherein particular preferably the detent of the at least two detents of the temperature probe used to snap with the counter detent of the access port or of the connector is chosen depending from the diameter of the pipe.

The resistance thermometer is preferably placed at a tip of the temperature probe.

Hereby it can be ensured that the resistance thermometer is placed at a desired and defined position within the pipe, if the geometry of the pipe and the access port fits to the location of the at least two detents on the temperature probe.

It can be provided that the method comprises the step of detecting an error state if a voltage used for upholding a constant heating current through the temperature resistor leaves a predefined threshold, wherein preferably the detection of the error state sets an alarm signal and/or alarm data indicating the error state and/or a flushing of the pipe with the fluid is performed or initialized every 24 hours or every 72 hours independent from any measurement during the error state.

Hereby it can be ensured that a malfunction of the method is detected. This can be used to sufficiently flushing the pipe with the fluid even if the sensor or the method of controlling the flow of fluid in the pipe does not work anymore. The unnecessary loss of fluid by flushing is regarded of less importance than mistakenly omitting the flushing, which could for example have an unhygienic aspect. This is especially helpful and reasonable if the fluid is drinking water.

A method according to the present invention can also comprise the step of measuring a duration of a second time span
1) during which the electric resistance or the voltage is raised above the first preset value, or
2) during which the electric resistance or the voltage did not drop below the second preset value after the last drop of electric resistance or voltage, and/or
3) during which the time derivative of the function of the electric resistance over time or of the function of the voltage over time did not drop below the negative gradient, and
   Flushing the pipe with the fluid, if the duration of the second time span exceeds a maximum time limit, wherein preferably the maximum time limit is not less than 1 hour, particular preferably not less than 24 hours and not more than 96 hours.

By this method and these measures a flow of the fluid can be guaranteed using only a single resistance thermometer for measuring.

The problems underlying the present invention are also solved by a device for measuring a flow of a fluid in a pipe, the device comprising a resistance thermometer which is placeable inside a pipe for conducting a fluid such that it is in thermal contact with the fluid, and a measuring and evaluation unit connected to the resistance thermometer to measure the electrical resistance of the resistance thermometer and/or to measure the voltage applied to the resistance thermometer, wherein the measuring and evaluation unit is programmed or able to perform the method steps according to the present invention and the measuring and evaluation unit is programmed or able to store the data and/or produce the signal indicating a stop of a flow of the fluid in the pipe if the electric resistance or the voltage raises above the first preset value and/or if the time derivative of the function of the electric resistance over time or of the function of the voltage over time raises above the positive gradient and/or store the data and/or produce the signal indicating detection of a flow of the fluid in the pipe if the electric resistance or the voltage drops below the second preset value and/or if the time derivative of the function of the electric resistance over time or of the function of the voltage over time drops below the negative gradient.

The device having the benefits of the method according to the present invention.

It can be provided that the resistance thermometer is connected to a heating voltage source to heat the resistance thermometer by applying a constant electric heating current to the resistance thermometer, wherein preferably the device further comprising a controller, the heating voltage source being connected to the controller, the controller being programmed to switch the electric heating current on and off and to keep the electric heating current constant, the controller particular preferably further being connected to the measuring and evaluation unit.

Hereby the resistance thermometer itself is usable to heat the resistance thermometer.

It can also be provided that the device comprises a temperature probe, wherein the resistance thermometer being part of the temperature probe and the temperature probe further comprising a protective sleeve in which the resistance thermometer is arranged, wherein the device preferably further comprising a connector for fixing the temperature probe at an access port of the pipe, wherein the temperature probe comprising at least two detents which are spaced apart, wherein particular preferably the spacing between the at least two detents is scaled with half the inner diameter of standard pipes used for conducting a certain fluid, especially particular preferably for conducting drinking water.

By these means the temperature probe of the device can be used to be inserted into the pipe. According to the preferred embodiment, the temperature probe can be used to easily place the resistance thermometer in the center of typical and standardized pipes, like drinking water pipes. Preferably, the resistance thermometer is arranged on a tip of the temperature probe.

Furthermore, it can be provided that the device further comprising a timing element and a signal giving unit for at least one of giving an alarm, displaying a measured or calculated value, driving a pump, opening and closing a valve connected to the pipe.

Hereby the device can be used to activate a flushing, to give detailed information about measured values or at least to indicate to a user that a flushing becomes necessary.

The invention is based on the surprising finding that it is possible to determine or to measure the occurrence of a flow of a fluid in a pipe using only a single resistance thermometer which is heated while measuring the heat loss from the resistance thermometer by means of monitoring electric resistance of the resistance thermometer and/or voltage applied to the resistance thermometer and thereby determining if a flow of the fluid occurs or not. Thereby the method and the device are easy to install and have a low risk for fails. Furthermore, the volume flow of the fluid can be calculated if the type of fluid, the pipe diameter and the pressure driving the flow is known or measured and the duration of the flow is measured. Only very few components and only a single resistance thermometer are needed to implement the method and built the device.

The method and the device according to the present invention provides an easy solution with no moving parts, small in size, low need of maintenance, low cost, and high reliability over time, because it does not rely on the long-term stability of the (temperature) resistor's characteristics and measuring properties.

The invention exploits the (thermal flow) principle, that the thermal energy transfer from a heating source to a colder fluid increases sharply and thus sensor temperature drops fast, when the fluid is in movement with respect to the situation when then fluid stands still. In other words, the change in the parameter relating the value of heat transfer to the difference in temperature of the heated surface and the medium are used according to the present invention to detect if a fluid in a pipe flows or not and to give signals, give details or induce a flushing of the fluid in the pipe.

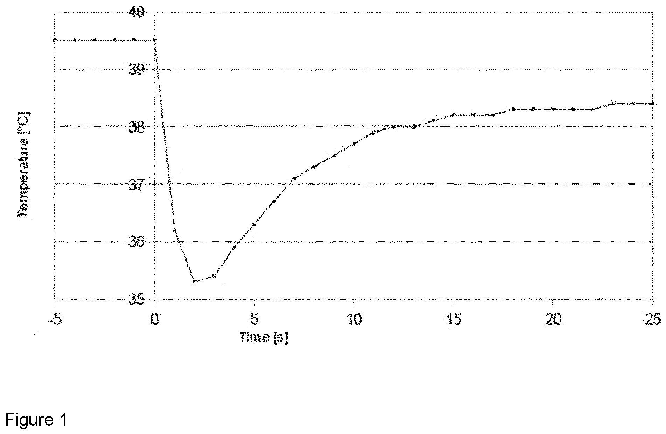

As a consequence, the temperature measured at or close to the heating point changes with a certain response time (see Figure 1). A typical time to reach the 90% of the difference between starting and final temperature is about a couple of seconds. With an applied heating power of a few watt, the temperature difference when water flows is about a few Kelvin with respect to when water is not flowing. The temperature difference is corresponding to a change in the sensor's electric resistance.

The method can be performed using a small-sized thermal type flow detecting sensor in form of a resistance thermometer to determine whether a liquid medium in a pipe is moving/flowing or not, the flow detecting sensor comprising a resistance thermometer with its tip immersed in the fluid to act as the heating source and the temperature monitor and an electronic unit to provide a constant electrical intensity and to identify any drop in the temperature (via voltage) due to the liquid flowing and an output interface to communicate a binary status (water flowing/not flowing) and optionally (if needed) the absolute temperature of the medium.

The criterion to establish whether the fluid has moved or not is to measure the temperature at constant time intervals and observe the temperature difference: if above a certain threshold an event is reported by the electronics.

The method and the device according to the invention is a monitor of any fluid or liquid medium in a pipe, where a measurement of speed or flow rate is not necessary, but the information that a sudden change in the flow occurred is of the essence.

The invention serves as simple monitor for hydraulic systems, for safety, health and environmental issues. It is known that drinking water (tap water) must satisfy high levels of health and safety and contains chlorine as an anti-bacteria agent. Unfortunately, this protection lasts only few hours before the possibility of build-up of pathogenic agents in still water (Legionella) increases and a flushing of the system is needed. The method and the device according to the present invention provides information whether the water has remained inside the pipes for too long (normally for more than 72 hours or other government rules) and if so, can activate an automatic flush inside home installations.

Further embodiments of the invention will now be explained with reference to four schematic figures below, however without limiting the invention. Wherein:
- Fig. 1: shows a diagram temperature versus time of a resistance thermometer of a device according to the present invention, wherein at time 0 s the water starts to flow for 1 s;
- Fig. 2: shows a diagram temperature versus time of a resistance thermometer of a device according to the present invention, wherein at time 0 s the water starts to flow for 40 s;
- Fig. 3: shows a schematic side view on a temperature probe according to the present invention which is suitable for performing a method according to the present invention;
- Fig. 4: shows a schematic side view of the temperature probe according to figure 3 placed in a pipe for performing a method according to the present invention;
- Fig. 5: shows a schematic cross-sectional view of the pipe of figure 4 in which the temperature probe is placed for performing a method according to the present invention;
- Fig. 6: shows a schematic side view of the temperature probe according to figure 3 placed in a smaller pipe for performing a method according to the present invention;
- Fig. 7: shows a schematic cross-sectional view of the smaller pipe of figure 6 in which the temperature probe is placed for performing a method according to the present invention; and
- Fig. 8: shows an exemplary sequence diagram for a method according to the present invention.

Figure 1 shows a diagram temperature versus time of a resistance thermometer of a device according to the present invention. The diagram shows the typical response time of a small sized self-heated sensor in flowing water. The resistance thermometer is kept at a temperature of about 39.5 °C by means of a constant heating current. At time 0 s the water starts to flow for 1 s. The temperature of the resistance thermometer drops immediately within 1 s to a temperature of about 36.2 °C and within 2 s to a temperature of about 35.3 °C. From that time on the temperature raises to a temperature of 38 °C within the next 10 s. The resistance thermometer is heated by the constant heating current the whole time.

The temperature of the resistance thermometer is measured by measuring the voltage and thus the electric resistance of the resistance thermometer. If a sudden drop of the electric resistance of the resistance thermometer or the voltage applied to the resistance thermometer is recognized, this is identified as a start of flowing water. Alternatively or additionally, the derivate of time of the function of the electric resistance or the voltage over time can be evaluated to identify a start of flowing water. As can be seen in Figure 1 the change of the slope of the function of temperature versus time is very significant around 0 s. Thus, the time derivative can easily be used as an indicator. For example, if the voltage or the electric resistance drops more than 1 % within two seconds a flow of water can be regarded as being detected.

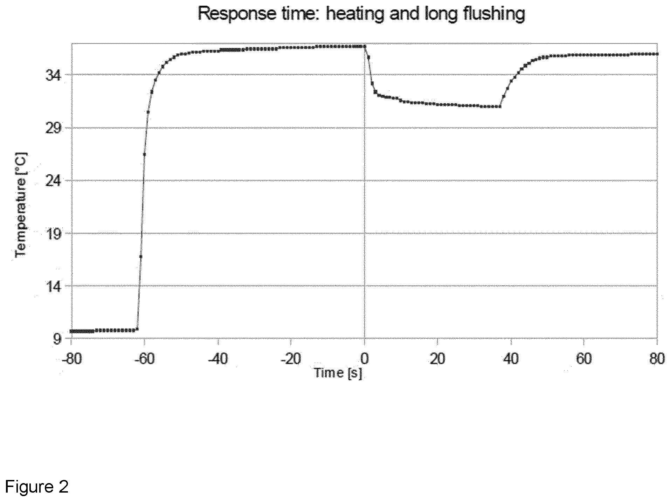

The resistance thermometer is a platinum thick layer on a ceramic aluminum oxide substrate. The platinum thick layer is structured as a meandering line with a length of about 8 mm and a thickness of up to 100 nm having broadened contacts. The aluminum oxide substrate has a thickness of about 0.5 mm. Suiting resistance thermometers are commercially available for example from Heraeus Nexensos GmbH, Murata Manufacturing Co., Ltd. and Innovative Sensor Technology IST AG. The resistance thermometer is arranged in a small sleeve made of stainless steel. The small sleeve is closed on a front face. The temperature probe is placed inside a pipe for conducting the water. The resistance thermometer is arranged in the center of the pipe. The same configuration is used for the setup for figure 2.

Figure 2 shows a diagram temperature versus time of a resistance thermometer of a device according to the present invention. The diagram shows the typical response time of a small sized self-heated sensor in flowing water. At the beginning (-80 s) now water flows through the pipe. An electric heating current is applied to the resistance thermometer beginning at -60 s. The electric heating current is kept constant in the following for the whole time. The resistance thermometer is hereby brought to a temperature of about 37 °C by means of the constant heating current. At time 0 s the water starts to flow for 40 s. The temperature of the resistance thermometer drops immediately within 2 s to a temperature of below 34 °C. After that the temperature drops to about 31 °C, but the temperature does not change more than 1 °C within a few seconds. When the water stops to flow at 40 s the temperature of the resistance thermometer immediately raises to 34 °C within 5 s. The raise of temperature slows and approaches a temperature of 38 °C again. The resistance thermometer is heated by the constant heating current the whole time.

This shows that a sudden change in temperature of a resistance thermometer, which is heated with a constant heating current is a good measure for determining if water starts flowing through a pipe or stops flowing through a pipe. The sudden change in temperature leads to a sudden change in electrical resistance of and voltage applied to the resistance thermometer.

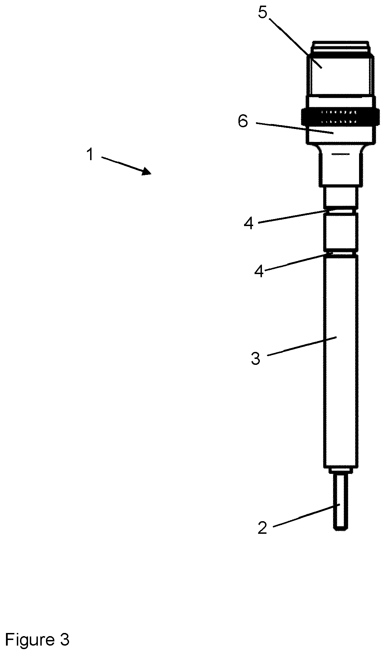

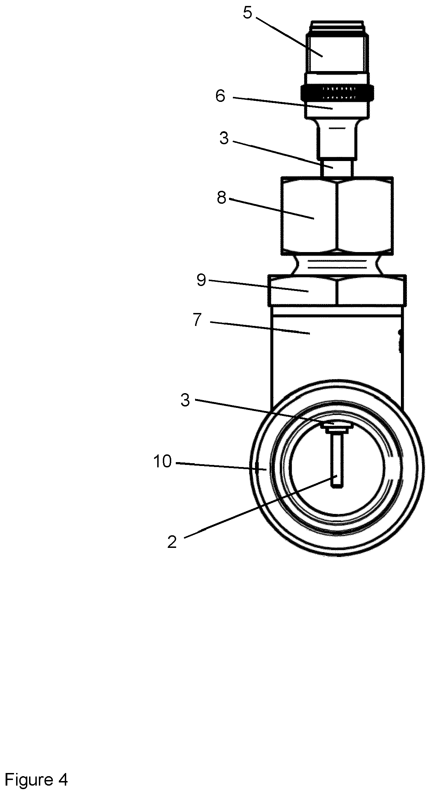

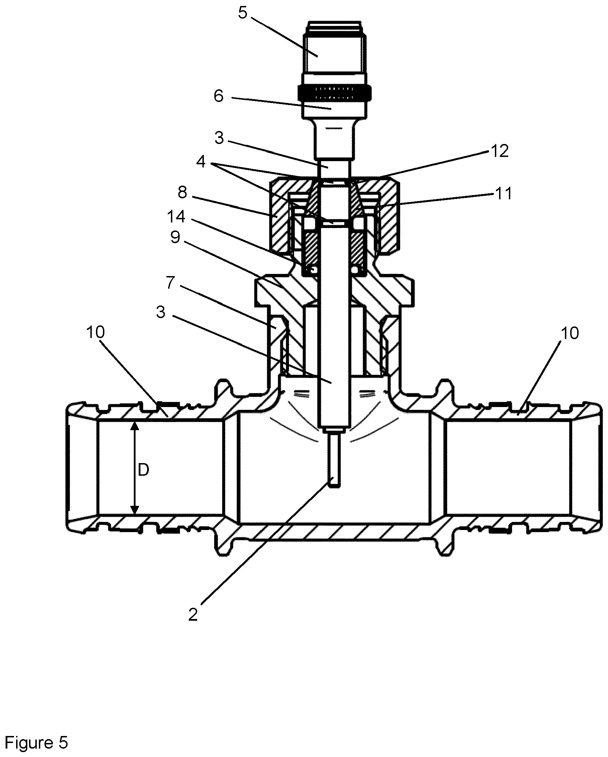

Figure 3 shows a schematic side view on a temperature probe 1 according to the present invention which is suitable for performing a method according to the present invention. The temperature probe 1 can comprise a protective sleeve 2. The protective sleeve 2 can be made from metal to allow good thermal conductivity to the inside of the protective sleeve 2. A resistance thermometer (not shown) can be arranged inside the protective sleeve 2. The resistance thermometer can be a metal thick film, preferably a platinum thick film, which forms a meandering line on a substrate. The substrate can be a ceramic substrate, preferably a ceramic Al₂O₃-substrate. The resistance thermometer can be arranged at the tip of the temperature probe 1 (below in Figure 3), which is to be placed in a pipe 10 for conducting a liquid (see figures 4 and 5).

The protective sleeve 2 can be held or molded in a tube 3 made from metal and/or plastic. Two detents 4 in form of two circumferential grooves can be arranged in the outer surface of the tube 3. The detents 4 can be axially distanced from one another with respect to the axis of the tube 3. On the opposite side of the resistance thermometer within the protective sleeve 2 a plug 5 for electrically connecting the temperature probe 1 to a computer or to other means can be arranged. The plug 5 can be a bus or can comprise a bus for transmitting data or signals to a computer. The plug 5 can be or can comprise an interface for transmitting data and commands.

The temperature probe 1 can comprise a measuring and evaluation unit 6. The measuring and evaluation unit 6 can be electrically connected to the resistance thermometer for measuring an electrical resistance of the resistance thermometer and/or for measuring a voltage applied to the resistance thermometer and for heating the resistance thermometer with a constant electrical heating current. Furthermore, the measuring and evaluation unit 6 can be electrically connected to the plug 5 for transferring data, signals and/or commands to devices connected to the plug 5.

The measuring and evaluation unit 6 can be programmed to perform a method according to the present invention. Therefore, the measuring and evaluation unit 6 can be programmed to apply a constant heating current to the resistance thermometer. Furthermore, the measuring and evaluation unit 6 can be programmed to measure the electric resistance of the resistance thermometer and/or the voltage applied to the resistance thermometer over time and to store and evaluate these functions. The time functions of electrical resistance and/or voltage can be analyzed by the measuring and evaluation unit 6 to detect changes in absolute values or changes of the first derivative of the functions over time. If certain preset values are exceeded or if the gradient raises above a certain positive gradient or drops below a certain negative gradient, the measuring and evaluation unit 6 can be programmed to store data or produce a signal, which can then be transferred through plug 5.

The measuring and evaluation unit 6 does not have to be part of the temperature probe 1. It may be advisable to have a measuring and evaluation unit connected to the plug 5. For example, a measuring and evaluation unit connected to the plug 5 can be part of a computer, which is programmed accordingly, wherein the plug 5 is connected via a cable and a bus of the computer to the computer. The computer can be programmed to perform a method according to the invention. However, the programmed computer will then be a part of the device according to the present invention, because it fulfills the function of the required measuring and evaluation unit. The resistance thermometer can then directly be connected to the plug 5.

Figures 4 and 5 show a schematic side view of the temperature probe according to figure 3 placed in a pipe 10 for performing a method according to the present invention and a schematic cross-sectional view of the pipe 10 of figure 4 in which the temperature probe is placed for performing a method according to the present invention.

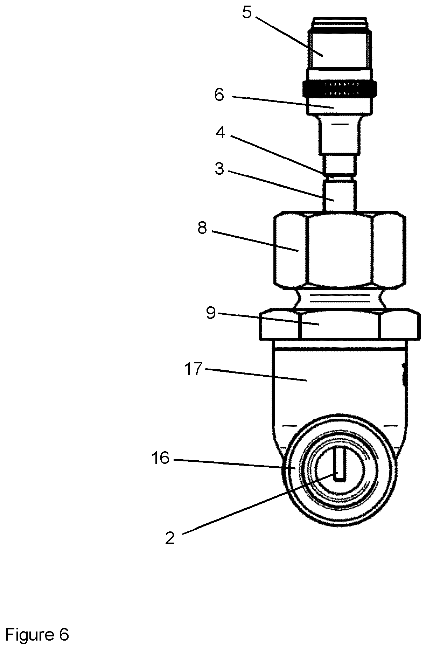

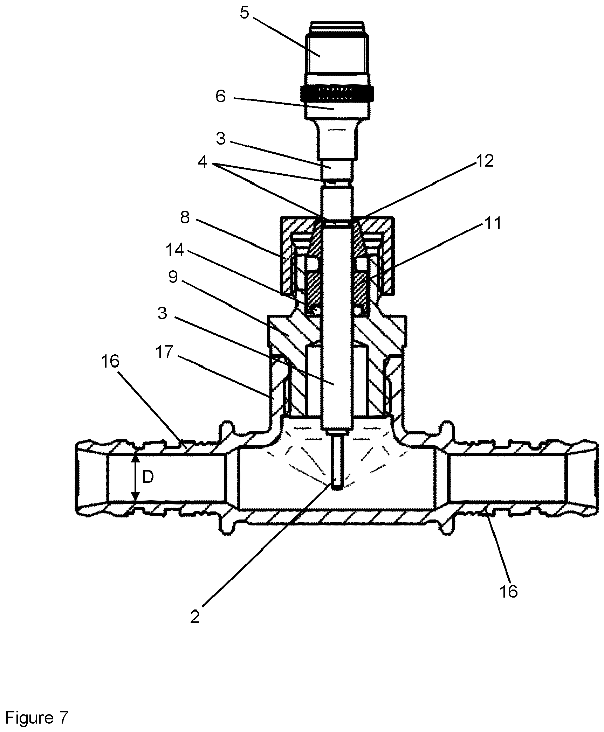

The pipe 10 can have an access port 7, in which the temperature probe 1 is fixed. The pipe 10 can form a T-piece with the access port 7. To create a fluid tight connection of the temperature probe 1 to the access port 7 of the pipe 10, the temperature probe 1 can be connected by a nut 8 to a connector 9, which connector 9 can be crimped or otherwise fixedly connected to the access port 7. The connector 9 comprises a fixation sleeve 11 having counter detents 12. The counter detents 12 can be protrusions which can engage in the grooves of detent 4 to fix the temperature probe 1 in a defined position to the connector 9. By screwing the nut 8 to the connector 9, the counter detents 12 of fixation sleeve 11 can be compressed and thus engage or lock with the grooves of the detents 4. The temperature probe 1 can thus be fixedly connected to the pipe 10. The distance of the detents 4 to the resistance thermometer can be chosen so that the resistance thermometer will be arranged in the center of pipe 10. Pipe 10 has a large inner diameter D. If the temperature probe 1 shall be connected to a tube 16 having a smaller inner diameter D, the other detent 4 can be used to make sure, the resistance thermometer in sleeve 2 will be arranged in the center of tube 16 (see figures 6 and 7).

The resistance thermometer (temperature positive resistor or sensor) can be enclosed in a few mm diameter metallic protective sleeve 2 and can be connected electrically to the electronic measuring and evaluation unit 6. The tip of the sensor should be placed halfway the cross-section of the pipe 10.

In this design, the heating source is at the same time also the temperature monitor. If a constant electric heating current is kept passing through the resistor (the resistance thermometer), the measured voltage at its ends changes according to the value of the resistance which is temperature dependent. The power provided to the resistance thermometer does not need to be precisely constant.

The voltage is measured by the electronic measuring and evaluation unit 6 with a typical sample rate of few seconds, that can be changed accordingly to the system specifications. If a decrease in voltage (a decrease of temperature makes the resistance value decrease) of "x" Volt (corresponding to a few degrees temperature change) is detected since the last measurement-sample, then an modbus output state of the measuring and evaluation unit 6 is set to one for as long as necessary for the connected user to record the event (and reset the time-counter for the flushing).

Figure 6 shows a schematic side view of the temperature probe according to figure 3 placed in a pipe 16 having a smaller inner diameter D compared to pipe 10 according to figures 4 and 5. The setup can be used for performing a method according to the present invention. Figure 7 shows a schematic cross-sectional view of the pipe 16 of figure 6 in which the temperature probe is placed for performing a method according to the present invention.

The setup is nearly identical to the one shown in figures 4 and 5. However, the tube 16 has a smaller diameter D than the tube 10. The pipe 16 can have an access port 17, in which the temperature probe 1 is fixed. The pipe 16 can form a T-piece with the access port 17. To create a fluid tight connection of the temperature probe 1 to the access port 17 of the pipe 16, the temperature probe 1 can be connected by a nut 8 to a connector 9, which can be crimped or otherwise fixedly connected to the access port 17. The connector 9 and the nut 8 can be identical to the embodiment according to figures 4 and 5. The connector 9 thus comprises a fixation sleeve 11 having counter detents 12. The counter detents 12 can be protrusions which can engage in the grooves of detent 4 to fix the temperature probe 1 in a defined position to the connector 9. By screwing the nut 8 to the connector 9, the counter detents 12 of fixation sleeve 11 can be compressed and thus engage or lock with the grooves of the detents 4. The temperature probe 1 can thus be fixedly connected to the pipe 16. The distance of the detents 4 to the resistance thermometer can be chosen so that the resistance thermometer will be arranged in the center of pipe 16.

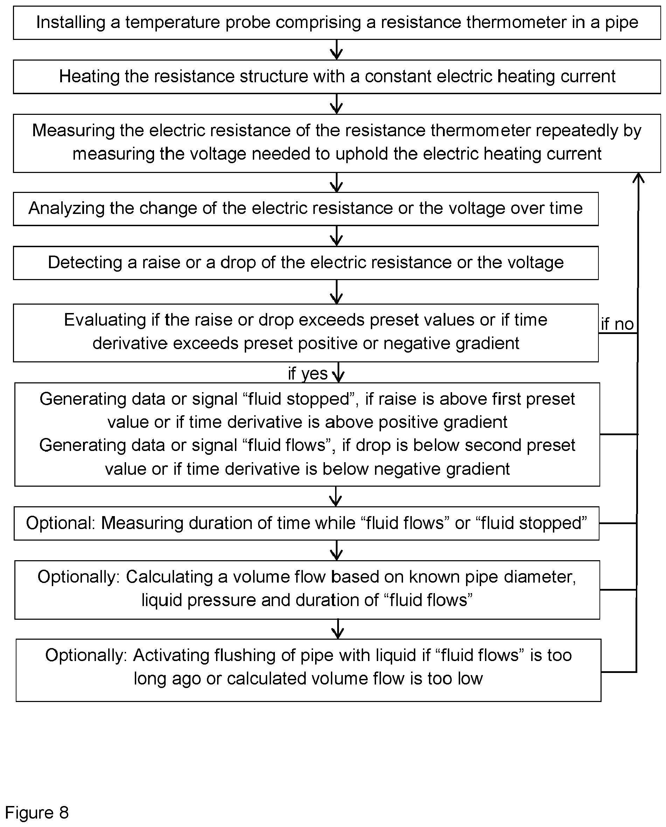

The measuring and evaluation unit 6 can be programmed to perform a method according to figure 8. In a first step, the temperature probe 1 is connected to a pipe 10, 16. The temperature probe 1 can be pushed so far into the connector 9 that one of the detents 4 can be locked with the counter detent 12 of fixation sleeve 11. The detent 4 chosen depends on the inner diameter D of the pipe 10, 16, so that the resistance thermometer of the temperature probe 1 will be located in the center of the pipe 10, 16.

In a next step the measuring and evaluation unit 6 or another controller applies a constant electric heating current to the resistance structure. The measuring and evaluation unit 6 or the other controller will uphold the constant electric heating current by adapting the voltage applied to the resistance structure if required due to temperature changes of the resistance structure.

It is preferred that the measuring and evaluation unit 6 lets a time period lapse before continuing with the next steps to allow the resistance thermometer to reach a state of equilibrium with respect to its temperature within the fluid in the pipe 10, 16.

In a next step, the electrical resistance of the resistance structure and/or the voltage applied to the resistance structure is repeatedly or continuously measured by the measuring and evaluation unit 6. The electric resistance and/or the voltage are recorded as a function over time and these functions and/or the values itself can be analyzed if any changes occur.

It can be analyzed if a raise or a drop of the values of electrical resistance or voltage occurs or if a first derivative of time drops to a negative gradient or raises to a positive gradient.

These changed are evaluated. If no event is recognized, the system will continue to measure the electric resistance and/or the voltage.

If an event is recognized, data or a signal "fluid stopped" can be generated if the raise of the electric resistance and/or the voltage is above a first preset value or if the time derivative is above a preset positive gradient. Alternatively, data or a signal "fluid flows" can be generated if the drop of the electric resistance and/or the voltage is below a second preset value or if the time derivative is below a preset negative gradient.

The system can then continue to measure the electric resistance and/or the voltage.

It can optionally be provided that the time is measured in the following until the fluid stops or starts to flow. Furthermore, from the duration of a fluid flows event the volume flow can be calculated from the known diameter D of the pipe 10, 16, from the pressure driving the liquid fluid through the pipe 10, 16 and from the duration of the flow.

According to a preferred embodiment it can be provided that an automatic flushing is initiated by the measuring and evaluation unit 6 via plug 5 to a pump or a valve (not shown) connected to the pipe 10, 16 or a signal is shown on a display or another output (not shown).

The features of the invention disclosed in the above description, the claims, figures, and exemplary embodiments can be essential both individually and in any combination for implementing the various embodiments of the invention.

### List of reference symbols

- 1: temperature probe
- 2: protective sleeve
- 3: tube
- 4: detent / groove
- 5: plug
- 6: measuring and evaluation unit
- 7: access port
- 8: nut
- 9: connector
- 10: pipe (large)
- 11: fixation sleeve
- 12: counter detent
- 14: seal ring
- 16: pipe (small)
- 17: access port
- D: inner diameter of pipe

## Claims

1. Method for detecting or measuring a flow of a fluid, preferably a liquid, in a pipe (10, 16) comprising the steps of
Heating a resistance thermometer which is placed inside a pipe (10, 16) for conducting a fluid and the resistance thermometer being in thermal contact with the fluid inside the pipe (10, 16),
Measuring the electric resistance of the resistance thermometer continuously or repeatedly over time or measuring the voltage applied to the resistance thermometer continuously or repeatedly over time,
Detecting a raise or a drop of the electric resistance of the resistance thermometer or the voltage applied to the resistance thermometer by evaluating the measured electric resistance or the voltage as a function of time, Evaluating if the raise of the electric resistance or the voltage raises above a first preset value or if the drop of the electric resistance or the voltage drops below a second preset value and/or
Evaluating if the time derivative of the function of the electric resistance over time or of the function of the voltage over time raises above a positive gradient or if the time derivative of the function of the electric resistance over time or of the function of the voltage over time drops below a negative gradient, and Storing data in an electronic memory and/or producing a signal,
the data and/or the signal indicating a stop of a flow of the fluid in the pipe (10, 16) if the electric resistance or the voltage raises above the first preset value and/or if the time derivative of the function of the electric resistance over time or of the function of the voltage over time raises above the positive gradient, and/or the data and/or the signal indicating detection of a flow of the fluid in the pipe (10, 16) if the electric resistance or the voltage drops below the second preset value and/or if the time derivative of the function of the electric resistance over time or of the function of the voltage over time drops below the negative gradient.

2. Method according to claim 1, **characterized in that**
the resistance thermometer is heated by conducting an electric heating current through the resistance thermometer, preferably by conducting a constant electric heating current through the resistance thermometer.

3. Method according to any one of the claims 1 or 2, **characterized in that**
the fluid is a liquid, preferably water, wherein particular preferably the method is used to detect a flow of water through the pipe (10, 16).

4. Method according to any one of the preceding claims, **characterized by** Generating a warning signal or flushing the fluid through the pipe (10, 16) if no drop below the second preset value is detected or if no drop below the negative gradient is detected for a predetermined time, preferably for a time of at least 24 hours, particular preferably for a time of 72 hours, wherein in particular the predetermined time can be manually reset by the user or is automatically reset if a flushing of the fluid is recognized by the evaluation for a minimum time duration.

5. Method according to any one of the preceding claims, **characterized in that** the resistance thermometer is heated with an electric power of no more than 30 Watt, preferably of between 0.1 to 10 Watt, particular preferably of between 0.5 Watt and 5 Watt.

6. Method according to any one of preceding claims, **characterized in that** the electric resistance of the resistance thermometer and/or the voltage applied to the resistance thermometer is measured continuously or repeatedly at least once every 10 minutes, preferably is measured repeatedly between every 0.1 second and every minute, particular preferably is measured repeatedly between every second and every 10 seconds.

7. Method according to any one of preceding claims, **characterized in that** the first preset value of the electric resistance and/or the voltage and the second preset value of the electric resistance and/or the voltage is equivalent to a drop or raise of the temperature of the resistance thermometer of at least 0.5 Kelvin, preferably of between 1 Kelvin and 10 Kelvin.

8. Method according to any one of the preceding claims, **characterized in that** the resistance thermometer is placed in the geometric center of the pipe (10, 16).

9. Method according to any one of the preceding claims, **characterized by** Placing the resistance thermometer in the pipe (10, 16) by fixing a temperature probe (1) comprising the resistance thermometer at an access port (7, 17) of the pipe (10, 16), wherein preferably the temperature probe (1) has at least two detents (4) and the temperature probe (1) is inserted through the access port (7, 17) into the pipe (10, 16) until a counter detent (12) of the access port (7, 17) or of a connector (9) snaps into one of the at least two detents (4) of the temperature probe (1), wherein particular preferably the detent (4) of the at least two detents (4) of the temperature probe (1) used to snap with the counter detent (12) of the access port (7, 17) or of the connector (9) is chosen depending from the diameter of the pipe (10, 16).

10. Method according to any one of the preceding claims, **characterized by** Detecting an error state if a voltage used for upholding a constant heating current through the temperature resistor leaves a predefined threshold, wherein preferably the detection of the error state sets an alarm signal and/or alarm data indicating the error state and/or a flushing of the pipe (10, 16) with the fluid is performed or initialized every 24 hours or every 72 hours independent from any measurement during the error state.

11. Method for flushing a pipe (10, 16) with a fluid comprising a method according to any one of the preceding claims, **characterized by**
Measuring a duration of a second time span
1) during which the electric resistance or the voltage is raised above the first preset value, or
2) during which the electric resistance or the voltage did not drop below the second preset value after the last drop of electric resistance or voltage, and/or
3) during which the time derivative of the function of the electric resistance over time or of the function of the voltage over time did not drop below the negative gradient, and
Flushing the pipe (10, 16) with the fluid, if the duration of the second time span exceeds a maximum time limit, wherein preferably the maximum time limit is not less than 1 hour, particular preferably not less than 24 hours and not more than 96 hours.

12. Device for measuring a flow of a fluid in a pipe (10, 16), the device comprising a resistance thermometer which is placeable inside a pipe (10, 16) for conducting a fluid such that it is in thermal contact with the fluid, and
a measuring and evaluation unit (6) connected to the resistance thermometer to measure the electrical resistance of the resistance thermometer and/or to measure the voltage applied to the resistance thermometer, wherein the measuring and evaluation unit (6) is programmed or able to perform the method steps according to any one of the preceding claims and the measuring and evaluation unit (6) is programmed or able to
store the data and/or produce the signal indicating a stop of a flow of the fluid in the pipe (10, 16) if the electric resistance or the voltage raises above the first preset value and/or if the time derivative of the function of the electric resistance over time or of the function of the voltage over time raises above the positive gradient and/or
store the data and/or produce the signal indicating detection of a flow of the fluid in the pipe (10, 16) if the electric resistance or the voltage drops below the second preset value and/or if the time derivative of the function of the electric resistance over time or of the function of the voltage over time drops below the negative gradient.

13. Device according to claim 12, **characterized in that**
the resistance thermometer is connected to a heating voltage source to heat the resistance thermometer by applying a constant electric heating current to the resistance thermometer, wherein preferably the device further comprising a controller, the heating voltage source being connected to the controller, the controller being programmed to switch the electric heating current on and off and to keep the electric heating current constant, the controller particular preferably further being connected to the measuring and evaluation unit (6).

14. Device according to claim 12 or 13, **characterized by**
the device comprising a temperature probe (1), wherein the resistance thermometer being part of the temperature probe (1) and the temperature probe (1) further comprising a protective sleeve (2) in which the resistance thermometer is arranged, wherein
the device preferably further comprising connector (9) for fixing the temperature probe (1) at an access port (7, 17) of the pipe (10, 16), wherein the temperature probe (1) comprising at least two detents (4) which are spaced apart, wherein particular preferably the spacing between the at least two detents (4) is scaled with half the inner diameter of standard pipes (10, 16) used for conducting a certain fluid, especially particular preferably for conducting drinking water.

15. Device according to any one of claims 12 to 14, **characterized in that**
the device further comprising a timing element and a signal giving unit for at least one of giving an alarm, displaying a measured or calculated value, driving a pump, opening and closing a valve connected to the pipe (10, 16).
